# EUROPEAN PATENT APPLICATION

(11) **EP 4 278 897 A1**
(43) Date of publication of application: **22.11.2023**
(21) Application number: 22174617.5
(22) Date of filing: 20.05.2022
(51) Int. Cl.: A01N 37/46, A01N 47/14, A01N 59/02, A01N 59/16, A01N 65/03, A01P 3/00, C05G 3/60

(54) **METHOD OF TREATMENT OF BUD ROT DISEASE IN PALM TREES**

(71) Applicant: Yara International ASA, 0277 Oslo (NO)
(72) Inventor: Suckheramani, P, 638314 TAMILNADU (IN); ThatchinaMoorthy, Hema, 41105 MAHARASHTRA (IN)
(74) Representative: AWA Sweden AB

(57) **Abstract**

The present disclosure provides a method for treating a palm tree suffering from bud rot, comprising the steps of: a) applying to the palm tree a biologically active dose of a fungicide composition comprising one or more fungicides, and a biostimulant composition comprising seaweed extract; and b) applying to the palm tree, from 5 to 10 days after the application of step a), a calcium nitrate (CN) composition comprising calcium nitrate, and elemental sulphur; wherein the calcium nitrate is applied in an amount in the range from 100 to 300 grams, and the elemental sulphur is applied in an amount in the range from 10 to 50.

## Description

### Field of the invention

The present invention is related to the field of agriculture, in particular the treatment of the bud rot disease in palm trees.

### Background of the invention

The *Arecaceae* family of plants comprises more than 2000 species, including some that are widely cultivated by humans to provide food or other benefits, such as the following genera: *Cocos* (coconut), *Elaeis* (oil palm), and *Phoenix* (date). These plants are cultivated in tropical and subtropical climates.

These plants can be subject to a variety of diseases and pests, which need to be treated to ensure optimal growth and yield. One of this disease is named *bud rot*, and is often caused by a fungus, *Phytophthora palmivora.* This fungi is now found worldwide, and if left untreated, can kill the infected tree. Even if the disease is not lethal, the production of the tree is heavily reduced, leading to financial loss for the farmer.

A variety of treatments have been developed over the years, but the efficiency of these treatments is variable and unpredictable.

So there is a need to provide a new method of treating palm trees suffering from bud rot disease.

### Summary of the invention

It was found that a combination of fungicides, biostimulant, and nutrients was successful at eradicating the disease and restoring the full health of palm trees affected by bud rot. In one aspect, the present disclosure provides a method for treating a palm tree suffering from bud rot, comprising the steps of: a) applying to the palm tree a biologically active dose of a fungicide composition comprising one or more fungicide, and a biostimulant composition comprising a seaweed extract; b) applying to the palm tree, from 5 to 10 days after the application of step a), a calcium nitrate (CN) composition comprising calcium nitrate, and elemental sulphur; wherein the calcium nitrate is applied in an amount in the range from 100 to 300 grams, and the elemental sulphur is applied in an amount in the range from 10 to 50 grams. In another aspect, the present disclosure provides the use of a fungicide composition, a biostimulant composition, a CN composition and elemental sulphur to treat a palm tree infected with *Phytophthora palmivora.*

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a composition" refers to one or more than one composition.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

A palm tree refer to any tree belonging to the *Arecaceae* family.

In one aspect, the present disclosure provides a method for treating a palm tree suffering from bud rot, comprising the steps of: a) applying to the palm tree a biologically active dose of a fungicide composition comprising one or more fungicide, and a biostimulant composition comprising seaweed extract; b) applying to the palm tree, from 5 to 10 days after the application of step a), a calcium nitrate (CN) composition comprising calcium nitrate, and elemental sulphur; wherein the calcium nitrate is applied in an amount in the range from 100 to 300 grams, and the elemental sulphur is applied in an amount in the range from 10 to 50 grams. It was found out that a fungicide application alone was not sufficient to eradicate the disease and restore the complete health of the palm tree. Instead it was observed that an application of biostimulant, in particular a biostimulant comprising a seaweed extract, and an application of nutrients in particular calcium nitrate, was very efficient at achieving these goals.

The method begins with the application on the same day of a fungicide composition and a biostimulant composition.

In one embodiment, the fungicide composition comprises two fungicides, in particular two fungicides selected from the group consisting of N-(methoxyacetyl)-N-(2,6-xylyl)-DL-alaninate, and an ethylene-bis-dithiocarbamate complex. The fungicide composition may comprise one or more fungicides. Over the years, several synthetic fungicides have been developed against bud rot. As these fungicides were applied in fields, resistance strains of fungi responsible for the disease also started to appear. So, it may be an advantage to apply a fungicide composition comprising more than one fungicide, to limit the risk that the infection may be resistant to the single fungicide used.

Examples of suitable fungicides are well known in the field. In particular, compounds such as *N*-(methoxyacetyl)-*N*-(2,6-xylyl)-DL-alaninate, also named Metalaxyl or methyl 2-[(2,6-dimethylphenyl)(methoxyacetyl)amino]propanoate (CAS number 57837-19-1), and ethylene-*bis-*dithiocarbamate complexes, are known to be active against bud rot.

A CAS number, or Chemical Abstracts Service number, is a unique number attributed to commercially available chemical substances. It is universal, and commonly used to correctly identify a chemical substance.

The ethylene-*bis*-dithiocarbamate complexes are a group of polymers where the repeating unit is an ethylene-*bis*-dithiocarbamate molecule bound to a metal ion, in particular zinc or manganese. The polymer containing zinc is known as Zineb (CAS number: 12122-67-7), and the polymer containing manganese is known as Maneb (CAS number: 12427-38-2). Mancozeb (CAS number: 8018-01-7) is a product containing these polymers comprising both zinc atoms, and manganese atoms.

In one embodiment, the fungicide composition comprises N-(methoxyacetyl)-N-(2,6-xylyl)-DL-alaninate and mancozeb, in particular wherein N-(methoxyacetyl)-N-(2,6-xylyl)-DL-alaninate and mancozeb are present in in a weight ratio of from 1:1 to 1:20, from 1:5 to 1:20 or from 1:10 to 1:20.

In one embodiment, from 3.0 to 9.0 grams of the one or more fungicides is applied to the palm tree in step a). Fungicides often have recommended doses from the supplier. The dose may depend on several parameters, such as the chemical substance, and the age of the palm tree: a young tree, for example less than 3 years old, may require a lower dose than an older and larger tree.

In one embodiment, from 4.0 to 9.0 grams or from 4.0 to 8.0 grams of the one or more fungicide if the palm tree is at least three years old, or from 3.0 to 5.0 grams of the one or more fungicide if the palm tree is younger than three years old, is applied to the palm tree in step a). If more than one fungicide is applied, the amount indicated above is the combined weight of all the fungicides applied to the palm tree.

In one embodiment, the fungicide composition is an aqueous composition, in particular an aqueous solution or an aqueous suspension.

The biostimulant composition applied in step a) comprises a seaweed extract. Seaweed extracts have been known for some years to be beneficial to crops, in particular in situations of abiotic stress, such as disease, heat stress, or water stress. The seaweed extracts are not absorbed by the plants for their chemical elements, but the molecules comprised in the seaweed extracts trigger physiological responses in the crops that help them reduce the damages caused by the stress.

In one embodiment, the biostimulant composition is an aqueous composition, in particular an aqueous solution or an aqueous suspension.

In one embodiment, the seaweed extract is an extract from the group consisting of *Kappaphycus alvarezii, Ascophyllum Nodosum, Ecklonia maxima, Durvillea potatorum, Macrocystis pyrifera, Sargassum, Laminaria digitata* and any mixture thereof. Different species of seaweed are known to be suitable for use in agriculture.

Seaweed extracts may be prepared from fresh seaweed according to procedures known in the art. For example seaweed extracts may be obtained by grinding dried seaweed and subjecting the dried powder to a chemical, biological or mechanical extraction. Seaweed-derived products can also be chemically treated, for example with a base and such products are referred to as alkaline seaweed extracts. It was noted that alkaline seaweed extracts, such as potassium seaweed extracts (obtained by treating seaweed extract with a potassium base, such as potassium hydroxide), have a higher water solubility. Dried seaweed extracts are commercially available from a wide range of suppliers. In one embodiment, the seaweed extract is an alkaline seaweed extract, in particular a potassium seaweed extract.

The seaweed extract may comprise at least 90 weight%, at least 95 weight%, at least 98 weight%, or at least 99 weight% of water-soluble material, but it may also comprise some water-insoluble material, such as less than 10 weight%, less than 5 weight%, less than 2 weight% or less than 1 weight% of water-insoluble material.

In one embodiment, the biostimulant composition comprises from 1.0 to 15 weight%, from 2.0 to 15 weight%, from 3.0 to 15 weight%, from 1.0 to 14 weight%, from 1.0 to 13 weight%, from 1.0 to 12 weight%, from 1.0 to 11 weight%, from 2.0 to 14 weight%, from 3.0 to 14 weight%, from 3.0 to 10 weight%, or from 3.0 to 9.0 weight%, of the seaweed extract.

In one embodiment, the biostimulant composition and/or the fungicide applied in step a), and/or the CN composition applied in step b) comprises a component selected from the group consisting of a primary nutrient, a secondary nutrient, a micronutrient and mixtures thereof.

Agricultural products to be given to crops often comprises more than one chemical substance in order to reduce the work for the farmer. For example, a biostimulant composition comprising a seaweed extract may also contain nutrients to further help the crops.

Primary nutrients are the elements that crops require the most, in terms per weight of nutrient per crop: nitrogen, phosphorous and potassium. Secondary nutrients are calcium, magnesium, and sulphur. Micronutrients are: boron, zinc, manganese, molybdenum, iron and copper.

For example, Yara International commercializes a biostimulant composition comprising a seaweed extract from *Ascophyllum Nodosum,* potassium, nitrogen, boron and zinc, under the trademark YaraVita Biotrac^{®}.

The amount of biostimulant provided to the palm tree depends on several factors, such as the nature of the seaweed extracts, the presence of other nutrients, and the concentration of the composition. A commercial product is often very concentrated and needs to be diluted in water before being distributed to the crops.

In one embodiment, the biostimulant composition applied in step a) is obtained by diluting a commercial product in water with a ratio of 1:500 to 1:50.

In one embodiment, from 200 to 300 grams of calcium nitrate if the palm tree is at least three years old, or from 100 to 200 grams of calcium nitrate if the palm tree is younger than three years old, is applied to the palm tree in step b).

The CN composition may pure calcium nitrate, or a product comprising calcium nitrate and other nutrients, such as ammonium nitrate.

The CN composition may be applied as a solid, or as a liquid composition, in particular an aqueous solution.

Calcium nitrate contains two nutrients required by crops, calcium and nitrogen, in the form of nitrate ions. Nitrogen is the main nutrient required by crops, it is used in very important mechanisms in crops, such as chlorophyll synthesis, energy production, and protein synthesis. Calcium is used in cell wall synthesis, enzyme activation and intercellular signaling.

It was observed that providing calcium nitrate to the crops suffering from bud rot allowed the crop to restore its health and fruit production.

In one embodiment, the CN composition further comprises boron. Fertilizer products may contain several nutrients to reduce the workload of the farmers. Calcium nitrate contain a primary nutrient, nitrogen, and a secondary nutrient, calcium. It may be an advantage to provide further nutrients in a single product.

For example, Yara International commercializes a product containing calcium nitrate, ammonium nitrate, and 0.3 weight% of boron, as sodium borate or borax, under the trademark YaraLiva Nitrabor^{®}. Boron may be present in the CN composition in different forms, such as boric acid, or borax.

The CN composition and elemental sulphur is applied from 5 to 10 days after the first step a). It is hypothesized that the nutrients should be applied once the infection has been eliminated or at least weakened by the fungicides. Elemental sulphur is also a fungicide, and it is hypothesized that a second fungicide application would eliminate any residual fungi that was not killed by the first application.

Due to possible resistance issues mentioned above, it is also an advantage to apply in step b) a different fungicide than those used in step a). The amount of elemental sulphur may depend on several factors, such as the type of palm tree treated, the age of the palm tree, or the size of the palm tree. 10 to 50 grams of elemental sulphur is a dose conventionally recommended for treatment against fungal infections.

In one embodiment, step b) is performed 6 to 8 days after step a).

In one embodiment, the treated palm tree is an oil palm tree, a coconut tree, or a date tree. Oil palm, coconut and date trees are the three most cultivated types of trees from the *Arecaceae* family.

In one embodiment, elemental sulphur is applied as wettable sulphur. Wettable sulphur is a colloidal form of elemental sulphur, which is commercially available. Wettable sulphur can be added as a solid to the palm tree or as an aqueous composition, such as an aqueous suspension or an aqueous solution.

In one embodiment, from 15 to 40 grams of elemental sulphur if the palm tree is at least three years old, or from 10 to 20 grams of elemental sulphur if the palm tree is younger than three years old, is applied in step b).

In one embodiment, from 15 to 40 grams of wettable sulphur if the palm tree is at least three years old, or from 10 to 20 grams of wettable sulphur if the palm tree is younger than three years old, is applied in step b).

The different compositions are applied to the palm tree according to standard agricultural practice. Solid compositions may be applied on the soil in the root zone area. After application to the soil, solid compositions may be covered with sand and/or soil so that the composition is not dispersed by the wind or rain. Solutions, in particular aqueous solutions, may be distributed to the soil as well, in particular in the root zone, this may be referred to as the drenching method. Solutions may also be sprayed on the palm tree, either on the leaves, or the crown of the tree. The drenching method may be preferred for tall trees where it is difficult to reach the leaves or the crown of the tree. For dwarf tress or low trees, the spraying method on the leaves or the crown of the tree may be preferred since it applies the active compounds directly in the zone infected with bud rot.
- In one embodiment: the fungicide composition applied in step a) comprises *N-*(methoxyacetyl)-*N*-(2,6-xylyl)-DL-alaninate and mancozeb in a weight ratio of from 1:1 to 1:20,
- from 4.0 to 9.0 grams mancozeb is applied in step a) if the palm tree is at least three years old, or from 3.0 to 5.0 grams of mancozeb is applied in step a) if the palm tree is younger than three years old.
- from 200 to 300 grams of calcium nitrate is applied in step b) to the palm tree if the palm tree is at least three years old, or from 100 to 200 grams of calcium nitrate is applied in step b) to the palm tree if the palm tree is younger than three years old, and
- from 15 to 40 grams of wettable sulphur if the palm tree is at least three years old, or from 10 to 20 grams of wettable sulphur if the palm tree is younger than three years old, is applied to the palm tree in step b).

In another aspect, the present disclosure provides the use of a fungicide composition, a biostimulant composition, a CN composition and elemental sulphur, in particular as wettable sulphur, to treat a palm tree infected with *Phytophthora palmivora.*

In another aspect, the present disclosure provides a kit of parts comprising: a fungicide composition comprising one or more fungicides; a biostimulant composition comprising seaweed extract; a CN composition comprising calcium nitrate; and elemental sulphur, in particular as wettable sulphur. The kit of parts can be used to treat a palm tree infected with bud rot according to the method according to the present disclosure.

### Example

A fungicide solution containing from 2.5 to 3.0 gram/liter of a composition comprising Metalaxyl and Mancozeb in a 1:16 weight ratio, and a biostimulant solution prepared by diluting YaraVita Biotrac^{®} in water (3 grams of Biotrac^{®} per liter of water) were applied to coconut trees infected by bud rot. Trees that were two years old or less received 1.5 liter of both solutions, and trees that were three years or older received 2.0 to 2.5 liters of both solutions. Seven days later, the older trees received 250 grams of YaraLiva Nitrabor^{®} (calcium nitrate, ammonium nitrate and boron), and the younger trees received 150 grams of Nitrabor^{®}. Nitrabor^{®} contains 15 weight% of nitrogen (as nitrate and as ammonium) and 26 weight% of calcium, expressed as CaO. The palm trees also received each 50 grams of wettable sulphur. 15 days after the CN and wettable sulphur application, no infection was visible on the palm trees.

During this trial, some trees received only the first fungicide composition, and the disease was not completely eliminated.

## Claims

1. A method for treating a palm tree suffering from bud rot, comprising the steps of:
a) applying to the palm tree a biologically active dose of a fungicide composition comprising one or more fungicides, and a biostimulant composition comprising seaweed extract;
b) applying to the palm tree, from 5 to 10 days after the application of step a), a calcium nitrate (CN) composition comprising calcium nitrate, and elemental sulphur;
wherein the calcium nitrate is applied in an amount in the range from 100 to 300 grams, and the elemental sulphur is applied in an amount in the range from 10 to 50 grams.

2. The method according to claim 1, wherein from 3.0 to 9.0 grams of the one or more fungicides is applied in step a).

3. The method according to claim 1 or 2, wherein the fungicide composition comprises two fungicides, in particular two fungicides selected from the group consisting of *N-*(methoxyacetyl)-*N*-(2,6-xylyl)-DL-alaninate and an ethylene-*bis*-dithiocarbamate complex.

4. The method according to any one of claims 1 to 3, wherein the fungicide composition comprises *N*-(methoxyacetyl)-*N*-(2,6-xylyl)-DL-alaninate and mancozeb, in particular wherein *N*-(methoxyacetyl)-*N*-(2,6-xylyl)-DL-alaninate and mancozeb are present in a weight ratio of from 1:1 to 1:20, in particular a weight ratio of from 1:10 to 1:20.

5. The method according to any one of claims 1 to 4, wherein from 4.0 to 9.0 grams, in particular from 4.0 to 8.0 grams, of the one or more fungicides is applied in step a) if the palm tree is at least three years old, or from 3.0 to 5.0 grams of the one or more fungicides is applied in step a) if the palm tree is younger than three years old.

6. The method according to any one of claims 1 to 5, wherein from 200 to 300 grams of calcium nitrate is applied in step b) to the palm tree if the palm tree is at least three years old, or from 100 to 200 grams of calcium nitrate is applied in step b) to the palm tree if the palm tree is younger than three years old.

7. The method according to any one of claims 1 to 6, wherein the biostimulant composition and/or the fungicide applied in step a), and/or the CN composition applied in step b) comprises a secondary nutrient and/or a micronutrient.

8. The method according to claim 7, wherein the CN composition comprises boron.

9. The method according to any one of claims 1 to 8, wherein step b) is performed 6 to 8 days after step a).

10. The method according to any one of claims 1 to 9, wherein the treated tree is an oil palm tree, a coconut tree, or a date tree.

11. The method according to any one of claims 1 to 10, wherein from 15 to 40 grams of elemental sulphur if the palm tree is at least three years old, or from 10 to 20 grams of elemental sulphur if the palm tree is younger than three years old, is applied to the palm tree in step b).

12. The method according to any one of claims 1 to 11, wherein elemental sulphur is applied in step b) as wettable sulphur.

13. The method according to claim 12, wherein:
- the fungicide composition applied in step a) comprises *N*-(methoxyacetyl)-*N*-(2,6-xylyl)-DL-alaninate and mancozeb in a weight ratio of from 1:1 to 1:20;
- from 4.0 to 9.0 grams mancozeb is applied in step a) if the palm tree is at least three years old, or from 3.0 to 5.0 grams of mancozeb is applied in step a) if the palm tree is younger than three years old.
- from 200 to 300 grams of calcium nitrate is applied in step b) to the palm tree if the palm tree is at least three years old, or from 100 to 200 grams of calcium nitrate is applied in step b) to the palm tree if the palm tree is younger than three years old, and
- from 15 to 40 grams of wettable sulphur if the palm tree is at least three years old, or from 10 to 20 grams of wettable sulphur if the palm tree is younger than three years old, is applied to the palm tree.

14. The use of a fungicide composition, a biostimulant composition, a CN composition and wettable sulphur to treat a palm tree infected with *Phytophthora palmivora.*

15. A kit of parts comprising:
- a fungicide composition comprising one or more fungicides;
- a biostimulant composition comprising seaweed extract;
- a CN composition comprising calcium nitrate; and
- elemental sulphur.
